# EUROPÄISCHE PATENTSCHRIFT

(11) **EP 0 540 014 B1**
(45) Veröffentlichungstag und Bekanntmachung des Hinweises auf die Patenterteilung: **11.09.1996**
(21) Anmeldenummer: 92118581.5
(22) Anmeldetag: 30.10.1992
(51) Int. Cl.: A21C 11/02, A21C 9/08

(54) **Verfahren zum Formen eines Teiglings und Vorrichtung zum Herstellen von Backprodukten sowie Andrückkörper hierfür**
Method of forming a dough piece and device for producing a bakery product and appropriate pressure element
Procédé de formage d'un morceau de pâte et appareil pour la production d'un produit de patisserie et corps de pression pour celui-ci

(30) Priorität: 01.11.1991 NL 9101834
(43) Veröffentlichungstag der Anmeldung: 05.05.1993
(73) Patentinhaber: A. FRITSCH GMBH & CO. KG, D-97348 Markt Einersheim (DE)
(72) Erfinder: Hagelen, J., NL-3743 HV Baarn (NL); Hayn, Peter, Dr., W-8717 Mainbernheim (DE)
(74) Vertreter: Matschkur, Götz, Lindner Patent- und Rechtsanwälte

(56) Entgegenhaltungen:
- EP-A- 0 166 042
- DE-A- 1 757 282
- FR-A- 2 575 366
- NL-A- 9 000 395
- US-A- 4 382 768

## Beschreibung

Die Erfindung betrifft ein Verfahren zum Formen eines Teiglings, bei dem dieser zugeschnitten, in oder auf einer Backform angeordnet und an dessen Boden, Decke und/oder Wände von innen oder außen angedrückt wird mittels eines verformbaren Andrückkörpers, der in und/oder über der Backform positioniert und - unter Vergrößerung seines Volumens - stempelartig betätigt wird. Ferner betrifft die Erfindung eine Vorrichtung zum Herstellen von Backprodukten, insbesondere geeignet zur Durchführung des genannten Verfahrens, die eine Einrichtung zur Herstellung einer kontinuierlichen Teigbahn sowie Stationen zum Ausstechen von Teiglingszuschnitten aus der Teigbahn, zum Falten der Teiglingszuschnitte, zum Anordnen der gefalteten Teiglingszuschnitte in Backformen und zum Andrücken des in der Backform befindlichen Teiglingszuschnitts aufweist.

In der Praxis ist es gängig, Backprodukte mit jeweils aus Teig hergestelltem Boden und stehenden Seitenwänden herzustellen, wobei letztere bei insbesondere maschinellen bzw. automatisierten Herstellungsverfahren in der Regel relativ niedrig ausgebildet sind und gegenüber dem Boden schräg verlaufen. Meistens sind die Backprodukte mit einer Füllung, z. B. mit einem Fleischprodukt wie Pastete, versehen.

Ferner ist es in der Praxis mühevoll, den Teigling so zu verformen, daß er überall ausreichend vollständig gegen den Backformboden und die Backformwände anliegt. Dies gilt umso mehr, als die Backform meist quaderartige Grundform mit rechteckigem Boden und schrägen Wänden aufweist, wobei letztere dazu dienen sollen, das Produkt leicht aus der Backform entfernen zu können. Der in der Backform zu verformende Teigling muß nicht nur in der zwischen dem Backformboden und den Backformwänden gebildeten Ecken, sondern auch zwischen den stehenden Backformwänden untereinander gebildeten Ecken möglichst vollständig angedrückt werden. Dabei kann gerade in diesen Eckbereichen ein unerwünschter Teigüberschuß entstehen. Dort ist dann die Teigdicke bzw. - dichte bis zu dreimal so groß wie im an die Backformwände und den Backformboden angrenzenden Bereich. Damit auch die dicksten bzw. dichtesten Teigteile beim Backvorgang gar werden, ist eine Verlängerung des Backverfahrens unumgänglich. Dies bringt jedoch wieder die Gefahr mit sich, daß die weniger dicken bzw. dichten Teigteile, entfernt von den Eckbereichen, zu gar werden bzw. anbrennen. Infolgedessen ist eine aufwendige und diffizile Einstellung und Durchführung des Backvorgangs notwendig, um unakzeptable Garabweichungen der Eckbereiche, der Wände und/oder des Bodens des fertigen Backprodukts zu vermeiden.

Bei einer bekannten Vorrichtung (vgl. NL-A-schrift 90 00 395) zum Verformen eines Teiglings auf einem Träger zu einer Teigscheibe mit hochstehendem Rand, beispielsweise für eine Pizza, ist es bekannt, einen Ballon aus flexiblem Material als Andrückkörper bzw. Andrückstempel zu verwenden, indem dieser auf die auf eine Unterlage als Träger gelegte Teigscheibe aufgedrückt wird. Dabei weichen die vom Ballon nicht abgedeckten Ränder der Teigscheibe beim Andrücken u. a. nach oben aus. Die Anpassung an verschiedene Teigarten oder sonstige Anforderungen wird durch feste Vorab-Einstellung des Mediumdruckes im Inneren des Ballons erreicht.

Ferner ist ein System entsprechend erstem Teil des Anspruchs 1 zur Herstellung von tiefgezogenen Pizzakrusten mit Seitenwänden, die in einem Winkel von 90 - 130° hochstehen, bekannt (vgl. EP-A-0 166 042): Aus einem Teigband werden Teigscheiben mit einem Schneidring ausgestochen und jeweils in eine Pizza-Pfanne geworfen. Jede Pizza-Pfanne wird mit einer Stempelmembran deckungsgleich ausgerichtet, welche dann aufgeblasen, in die Pfanne zum Andrücken der Teigscheibe sowohl an deren Boden als auch an deren Innenwände bewegt und dann wieder zurückgezogen wird. Jedoch hat die Praxis gezeigt, daß sich damit exakt vertikale Seitenwände für das Backprodukt (Pizzakruste) doch nur sehr schwer und vor allem nicht in ausreichender Höhe herstellen lassen.

Mithin wird das der Erfindung zugrundeliegende Problem aufgeworfen, unter Vermeidung der obengenannten Nachteile ein System zum Herstellen einschließlich Formen von Teiglingen, insbesondere für Pasteten, aufzuzeigen, mit dem für das sich ergebende Backprodukt eine Form mit sowohl exakt vertikalen als auch hohen Wänden, deren Abmessungen insbesondere die Länge und/oder Breite des Backprodukts übersteigen, erreichbar ist. Zur Lösung wird ein Verfahren nach Anspruch 1 vorgeschlagen.

Mit Vorteil sind die Abmessungen der (zweiten) Zusatzteile einigermaßen größer als die Abmessungen der Backformwände ausgeführt, indem (einstückige) Ansätze an die Ränder der Zusatzteile angeformt sind.

Die erfindungsgemäß beim Teiglings-Zuschnitt vorgesehenen Faltlinien lassen sich in besonderer Weiterbildung dadurch zweckmäßig ausnutzen, daß zuerst die genannten Zusatzteile gefaltet und dann der Zuschnitt in der Backform angeordnet wird, wobei man den gefalteten Teig anhebt, über der Backform positioniert und anschließend in die Backform senkt, vorzugsweise mittels eines Saugmundstücks.

Nach einer im Rahmen der allgemeinen erfinderischen Idee liegenden Erfindungsalternative wird zur Lösung des eingangs genannten Problems auch ein Vorrichtung zum Herstellen von Backprodukten mit den im Anspruch 10 genannten Merkmalen vorgeschlagen. Also ist die Station zum Falten der Teiglingszuschnitte in einen ortsfest angeordneten Zentralteil und gelenkig damit verbundene Faltorgane strukturiert.

Nach einer besonders vorteilhaften Ausbildung der Erfindung besitzt der Andrückkörper ein versteiftes, zylinderförmiges Tragteil, der kernartig von einem expandierbaren Torus- und/oder Wulst-Hohlkörper im auf den Teigling einwirkenden Bereich umgeben ist. Vor allem wenn der Hohlkörper als den Tragkörper umgebender und durch Aufblasen aufdehnbarer Schlauch ausgeführt ist, können hochstehende Seitenwände einer tief eingedrückten Teiglingsform besonders exakt im rechten Winkel zur Bodenfläche und mit außerordentlicher Höhe ausgeführt werden.

Weitere Merkmale, Einzelheiten und Vorteile auf der Basis der Erfindung ergeben sich aus den Unteransprüchen sowie der Beschreibung von Ausführungsbeispielen sowohl aus dem Stand der Technik als auch der Erfindung in Verbindung mit den Zeichnungen. Diese zeigen jeweils schematisch in
- Fig. 1A - 1D: die im Stand der Technik praktizierten Schritte zur Formung eines Teiglings,
- Fig. 2A - G: die gemäß Erfindung aufeinanderfolgenden Schritte des Teig-Andrückverfahrens,
- Fig. 3A - B: im Schnitt die erfindungsgemäße Teigandrückvorrichtung,
- Fig. 4: in Draufsicht einen erfindungsgemäßen Teigzuschnitt,
- Fig. 5A: in Seitenansicht eine erfindungsgemäße Teigherstellungsvorrichtung,
- Fig. 5B: eine perspektivische Ansicht auf die Ausstechform mit Stempelmesser der Vorrichtung gem. Fig. 5A,
- Fig. 6A - B: in Seitenansicht verschiedene Schritte des erfindungsgemäßen Teigzuschnitt-Herstellungsverfahrens,
- Fig. 7A - B: eine Falteinrichtung für Teigzuschnitte gemäß Erfindung in unterschiedlichen Stellungen,
- Fig. 8: eine vergrößerte Detail-Ansicht eines gefalteten und teilweise überlappten Teigzuschnitts in Draufsicht,
- Fig. 9: eine Ansicht auf eine Einrichtung zum Aufnehmen der Teigform gemäß Erfindung, und
- Fig. 10: teilweise im Schnitt eine abgewandelte Ausführung für eine erfindungsgemäße Teig-Andrückvorrichtung.

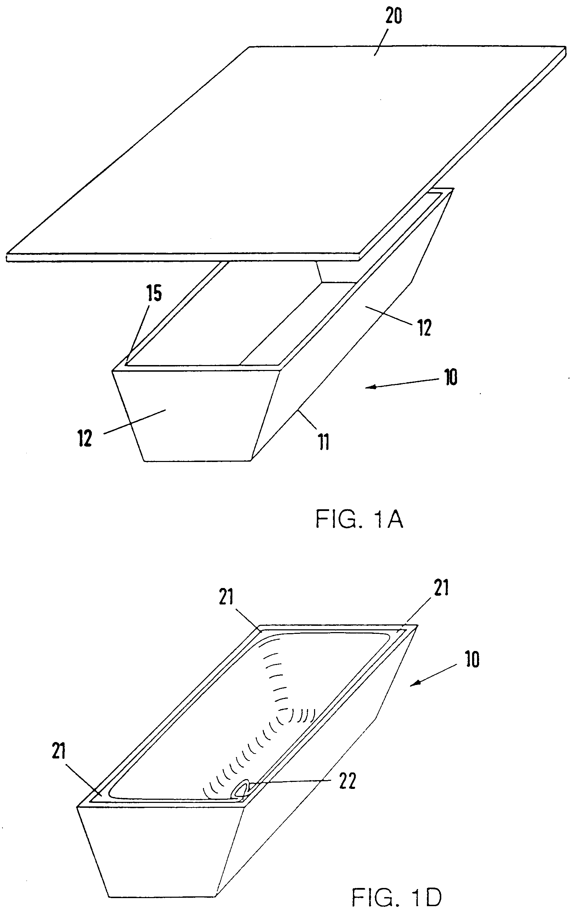

Gemäß Fig. 1A wird eine Backform 10 mit einem rechteckigen Backformboden 11 und einigermaßen schräg stehenden Backformwänden 12 verwendet. Der in der Backform 10 anzuordnende Teigling 20 besitzt in seiner Ausgangsform einen rechteckigen Grundriß.

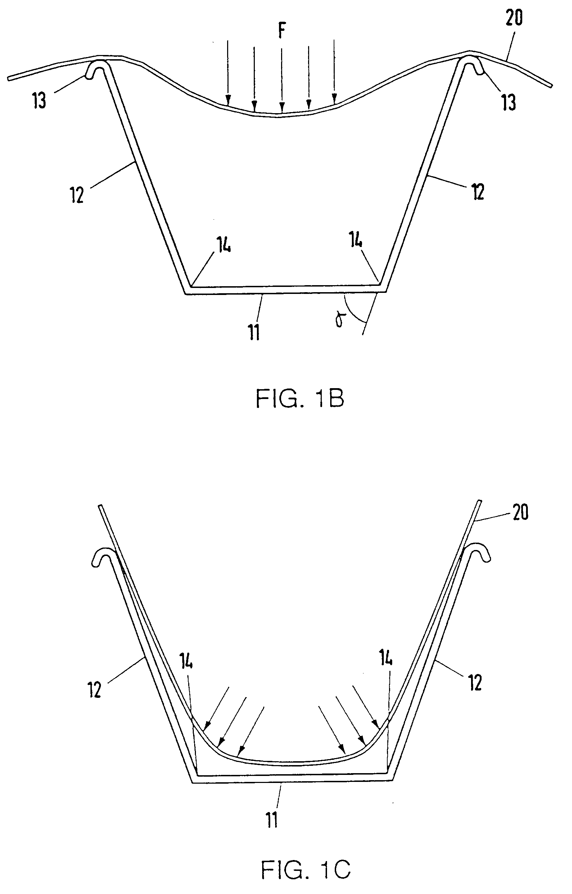

Gemäß Fig. 1B wird der Teigling 20 manuell auf die oberen Ränder 13 der Backform 10 gelegt. Durch manuelles Ausüben einer Kraft oder eines Druckes auf den mittleren Bereich des Teiglings 20 (vgl. Pfeile F) wird er in die Backform 10 gedrückt. Dabei wird von den Rändern 13 der stehenden Backformwände 12 eine aufwärts gerichtete Reaktions- bzw. Gegenkraft auf den Teig 20 ausgeübt, so daß im Teig 20 eine Zugspannung entsteht. Es besteht also die Gefahr, daß der Teig 20 insbesondere an den Rändern 13 reißt. Um dieser Gefahr zu begegnen, müssen die oberen Ränder 13 der Backform 10 abgerundet und/oder nach außen oder innen umgebogen sein. Bei der manuellen Teigbehandlung muß weiter dafür Sorge getragen werden, daß - wie aus Fig. 1C ersichtlich - die Teigmasse in die Eckbereiche 14 zwischen dem Backformboden 11 und den Backformwänden 12 gut angedrückt wird. Das größte Problem wird jedoch durch die weiteren, schräg nach oben verlaufenden Eckbereiche 15 zwischen den Backformwänden 12 (vgl. Fig. 1A) verursacht: dort muß ein Teigüberschuß 21 (vgl. Fig. 1D) in die Ecken 15 angedrückt werden, da der Teig 20 in den Eckbereichen 15 Falten 22 bildet.

Wie oben erwähnt, ist dieser Schritt beim bekannten Verfahren ziemlich schwer und arbeitsintensiv und kostet auch verhältnismäßig viel Zeit. Gleichwohl ist es kaum zu vermeiden, daß im fertigen Backprodukt die Wanddicke bzw. Teigdichte oder -masse aufgrund des Teigüberschusses 21 in und nahe den Eckbereichen 15 viel größer als in den sonstigen Teigbereichen (im von den Ecken entfernten Bereich der Seiten- und Bodenwände der Backform 10) ist.

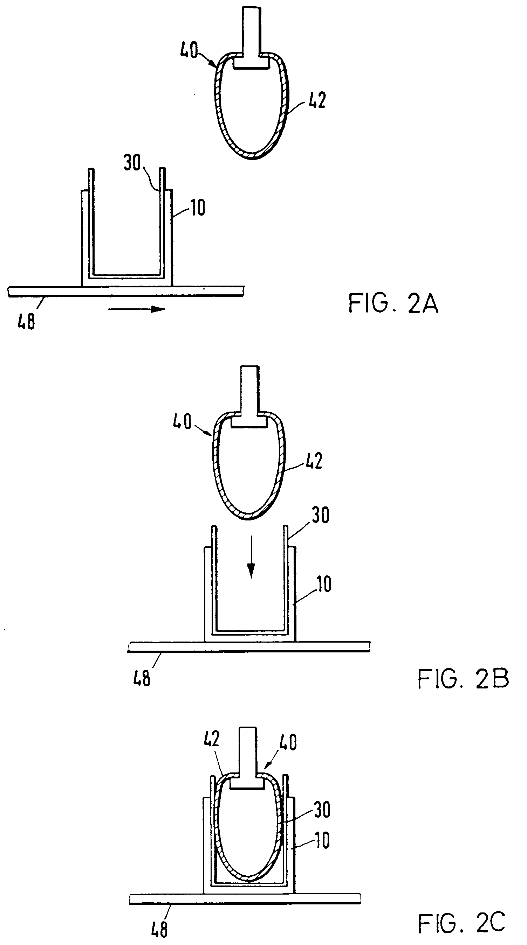

Gemäß Fig. 2A - 2G wird im Rahmen der Erfindung eine Andrückvorrichtung 40 verwendet, die beispielsweise ortsfest angeordnet sein kann, während die Backform 10 unterhalb der Andrückvorrichtung 40 vorbeigeführt wird. In der Backform 10 ist ein bereits gefalteter Teigformling 30, dessen Grundform im wesentlichen schon der der Backform 10 entspricht, lose angeordnet. Die Backform 10 befindet sich auf einer Transporteinrichtung, beispielsweise einem Förderband 48, das die Backform 10 zur Andrückvorrichtung 40 transportiert (vgl. Fig. 2A). Befindet sich die Backform 10 unmittelbar unter der Andrückvorrichtung 40 (Fig. 2B), wird das Förderband 48 angehalten und die Andrückvorrichtung 40 nach unten in den Innenraum der Backform 10 bewegt (Fig. 2C). Diese Lage läßt sich als Betriebslage bezeichnen.

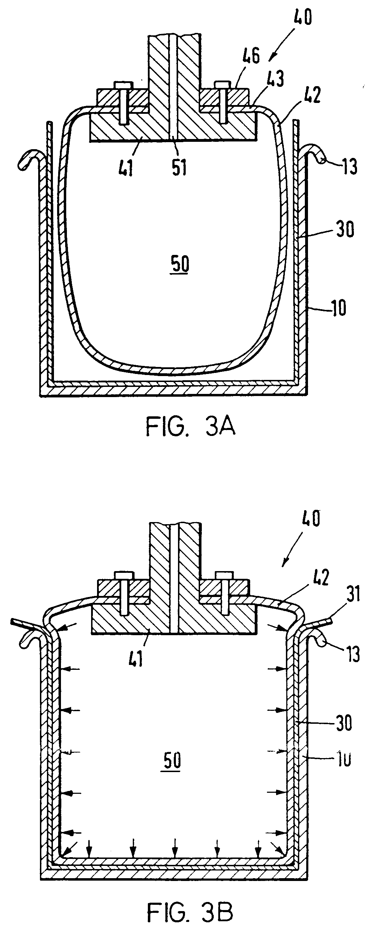

Gemäß Fig. 3A ist die Andrückvorrichtung 40 mit einem Basis- bzw. Tragteil 41 versehen, deren horizontale Abmessungen im wesentlichen denen des Backformbodens 11 entsprechen. Weiter besitzt die Andrückvorrichtung 40 ein flexibles und elastisch verformbares, mit einem Ballon vergleichbares Andrückorgan 42, das mit seinem freien Rand 43 abdichtend am Tragteil 41 befestigt ist, z. B. mittels einer daran festgeschraubten Klemme 46. Im entspannten, nicht aufgeblasenen Zustand paßt das Andrückorgan 42 ohne weiteres in den aufgefalteten Teigformling 30. Der Abstand zwischen der Außenfläche des Andrückorgans 42 und der Innenfläche des Teigformlings 30 beträgt vorzugsweise weniger als 1 cm. Im entspannten Ausgangszustand sind für das Andrückorgan 42 keine spezifischen Profile oder Außenkonturen notwendig. Vorzugsweise ist die vertikale Erstreckung des Andrückorgans 42 so gewählt, daß sich seine Oberseite in der Betriebslage der Andrückvorrichtung 40 oberhalb des Höhenniveaus der Ränder 13 der Backform 10 befindet. Zweckmäßig sind die Ränder des Tragteils 41 abgerundet, um Beschädigungen des Andrückorgans zu vermeiden (nicht gezeichnet). Das Andrückorgan 42 nebst seines Tragteils 41 umgrenzen einen abgeschlossenen Raum 50, der durch mindestens einen das Tragteil 41 durchsetzenden Kanal 51 mit (nicht gezeichneten) Druckmedium-Versorgungsmitteln verbunden ist, die zum Verändern des Druckes im Raum 50 ausgebildet sind. Diese Mittel können beispielsweise einen Behälter umfassen, der mit einem Vorrat an unter Druck gehaltenem Gas gefüllt ist; der Behälter ist dann über ein steuerbares (nicht gezeichnetes) Ventil mit dem Kanal 51 verbunden, was im Rahmen des allgemeinen Fachwissens liegt. Insbesondere ist es möglich, Druckluft zu verwenden. Vor allem liegt es auch im Rahmen der Erfindung, das Gas, die Druckluft oder ein sonstiges Fluid auf eine bestimmte Temperatur zu heizen, die für die Behandlung des Teigs in der Backform von Vorteil sein kann.

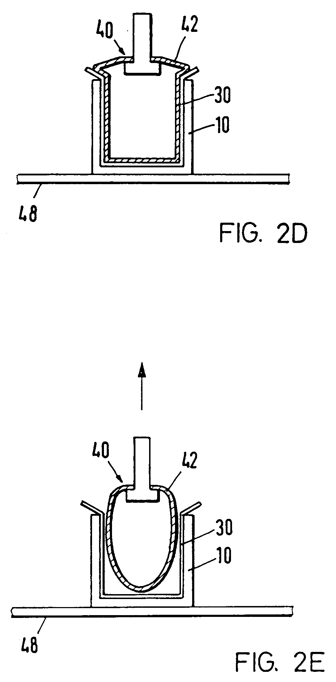

Gemäß Fig. 2D und - mehr im Detail - Fig. 3B wird durch Erhöhung des Druckes im Raum 50 erreicht, daß das Andrückorgan 42 sich im Volumen vergrößert bzw. expandiert, wodurch es mit dem Teigformling 30 in Berührung kommt. Durch weiteres Steigern des Druckes im Raum 50 wird von dem Andrückorgan 42 eine Andrückkraft auf den Teigformling 30 ausgeübt, wie mit der Vielzahl der Pfeile in Fig. 3B angedeutet. Der genaue Wert, den der Druck im Raum 50 annehmen muß, um das Andrückorgan 42 auf geeignete Weise auf den Teigformling 30 in der Backform 10 einwirken zu lassen, ergibt sich für den Fachmann in Abhängigkeit von der Teigart und von der Teigdicke.

Die Seitenwände des Teigformlings 30 können nach seiner Anordnung in der Backform 10 vorzugsweise getrennt, d. h. im Abstand von oder nur in leichter Berührung mit den Seitenwänden 12 der Backform 10 positioniert sein (in den Figuren nicht dargestellt), wodurch das Einfügen des Teigformlings 30 in die Backform 10 erleichtert wird. Der Teigformling 30 ruht dann mit seinem Bodenteil auf dem Boden 11 der Backform 10. In der Praxis hat es sich herausgestellt, daß es dann grundsätzlich nicht mehr notwendig ist, das Andrückorgan 42 gegen den Bodenteil des Teigformlings 30 zu drücken, damit der Teigformling-Bodenteil seinerseits an den Boden 11 der Backform 10 angedrückt wird.

Gemäß Fig. 3B befindet sich die Oberseite des Andrückorgans 42 bei Betriebsstellung der Andrückvorrichtung 40 oberhalb des Niveaus der oberen Ränder 13 der Backform 10, wie oben erläutert. Dadurch können die Enden 31 der hochgefalteten, stehenden Seitenwände des Teigformlings 30 vom Andrückorgan 42 um den oberen Rand 13 der Backform 10 gelegt bzw. gefaltet werden.

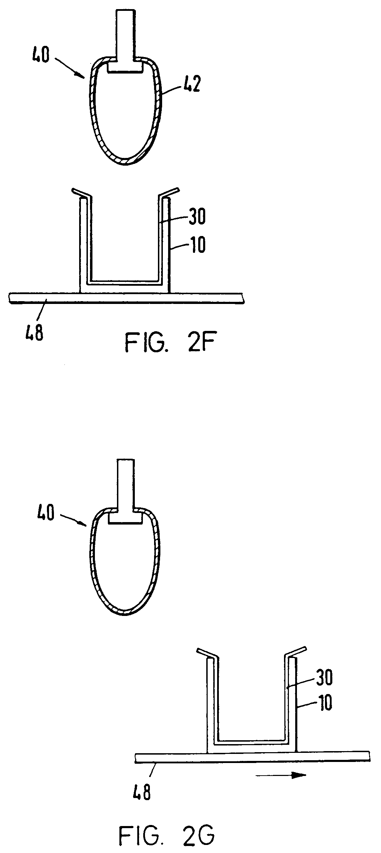

Nach Beendigung des Andrückens des Teigformlings 30 an die Backform 10 wird gemäß Fig. 2E der Druck im Raum 50 verringert, so daß das Andrückorgan 42 sein Volumen vermindert und sich so vom Teigformling 30 löst. Daraufhin wird - vgl. Fig. 2F - die Andrückvorrichtung 40 aus der Backform 10 angehoben. Sodann wird die Backform 10 hinter der Andrückvorrichtung 40 wegtransportiert (vgl. Fig. 2G), um zu einer nächsten Station, wie z. B. eine Backstation, zu gelangen. Gegebenenfalls kann währenddessen mittels einer Füllstation Füllmaterial in den nach oben offenen Teigformling 30 eingefüllt werden. Die Andrückvorrichtung 40 ist nun frei, um bei einer nächsten Backform den darin befindlichen Teigformling stempelartig hineinzudrücken (Fig. 2A). Der Zyklus gemäß Figuren 2A - 2G kann also wiederholt werden.

Vorzugsweise ist das erfindungsgemäße Verfahren zum Formen des Teiglings um einen dem oben besprochenen Andrückschritt vorausgehenden Formschritt ergänzt, indem aus dem Teig ein Teigling-Zuschnitt gebildet wird. Anschließend folgt ein Faltschritt, indem der Zuschnitt zum obengenannten Teigformling gemäß Figuren 2A - 3B gestaltet wird. Durch das Herstellen eines Teigzuschnitts wird der Vorteil erzielt, daß sich in der endgültigen Teigform kein Teigüberschuß befindet oder wenigstens höchstens soviel Überschuß, wie nötig ist, um einen flüssigkeitsdichten Abschluß der Wände des Teigformlings zu erreichen. Das erspart Andrückkraft für die Eckbereiche des Teigformlings, und im resultierenden Fertigprodukt sind die Teigwände in den Eckbereichen oder in deren Nähe weniger dick, als wie durch die bisher im Stand der Technik bekannte, oben erläuterte Praxis erreicht werden kann. So läßt sich mit der Erfindung eine verbesserte Homogenität der Gare erzielen. Ein weiterer Vorteil geht auf das Falten des Teigzuschnitts zurück. Die Ausübung von Zugkräften wird dabei vermieden, es genügt lediglich ein Einlegen des hochgefalteten Teigformlings in die Backform.

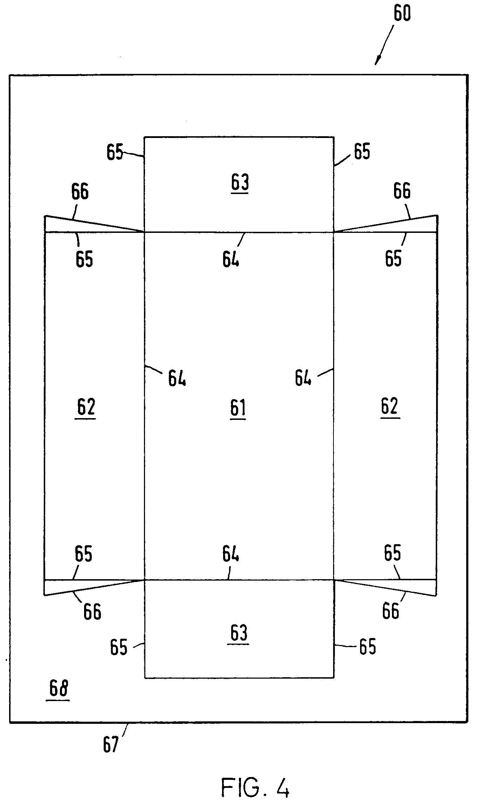

Gemäß Fig. 4 wird ein Teiglingszuschnitt 60 (der beispielsweise für ein Backprodukt mit einer Außenform entsprechend eines länglichen Pyramidenstumpfes vorgesehen sein kann) mit einem Basisteil 61 in Form eines Rechtecks gebildet. An die längeren Rechteckseiten grenzen jeweils längere Zusatzteile, nämlich längere Seitenteile 62; analog gehen von den kurzen Seiten des Basisteils 61 kürzere Zusatzteile, nämlich kurze Seitenteile 63 aus. Die langen und die kurzen Rechteckseiten des Basisteils 61 sind durch die (künftigen) Faltlinien 64 des Teiglingszuschnitts 60 bestimmt. Im gezeichneten Beispiel sind die langen und kurzen Seitenteile 62, 63 rechteckförmig. Sollen, wie oben angesprochen, die Seitenwände des Backprodukts nicht streng vertikal, sondern schräg zur Horizontalen verlaufen, wären gegebenenfalls trapezförmige oder sonstwie entsprechend geformte Seitenteile vorzusehen.

Gemäß Fig. 4 sind die von den Faltlinien 64 ausgehenden Ränder 65 der Seitenteile 62, 63 mit Ansätzen in Form eines zusätzlichen Teigteils 66 versehen, der nach dem Falten eine Überlappung in den Eckbereichen des Teigformlings bewirken soll, um auf diese Weise eine flüssigkeitsdichte Abdichtung zwischen den gefalteten Seitenteilen 62, 63 zu gewährleisten. Grundsätzlich können alle von der Faltlinie 64 ausgehenden Ränder 65 der Seitenteile 62, 63 jeweils mit derartigen Ansätzen bzw. Teigteilen 66 versehen sein. In der Praxis wird es in der Regel jedoch genügen, wenn je Ecke nur ein zusätzlicher Teigteil bzw. Ansatz 66 vorhanden ist. Gemäß gezeichnetem Beispiel in Fig. 4 sind nur die langen Seitenteile 62 mit einem derartigen zusätzlichen Teigteil 66 versehen.

Das Herstellen des Teigzuschnitts 60 gemäß Fig. 4 kann zweckmäßigerweise dadurch erfolgen, daß man von einer Teiglings-Rohform 67, z. B. endlosen Bandform, ausgeht und daraus den Teiglingszuschnitt 60 aussticht. Dieses Ausstechen kann positiv erfolgen, z. B. mittels Stanzen oder Schneiden, wobei ein Stanz- oder Schneidstempel, der Schneidkanten entsprechend der Kontur des herzustellenden Teiglingszuschnitt hat, verwendet wird. Andererseits kann dessen Herausnehmen auch negativ erfolgen, indem überschüssige Teigteile 68 vom Rohform-Teigling 67 entfernt werden, so daß der Teigzuschnitt 60 übrig bleibt.

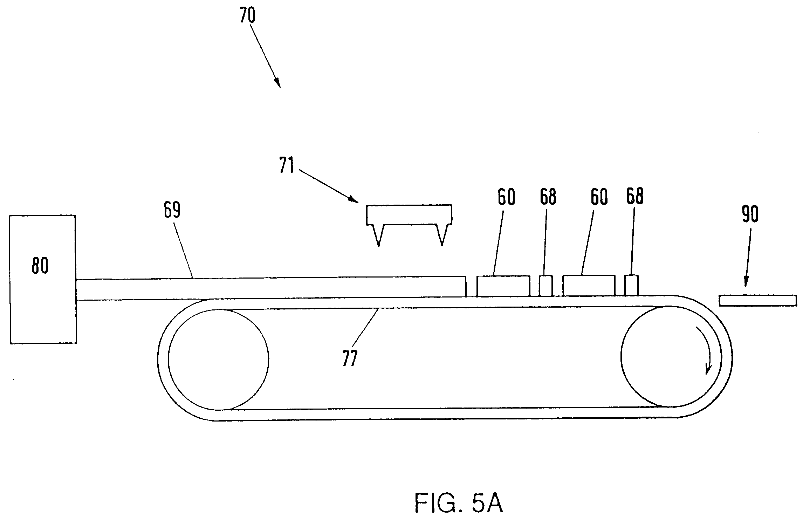

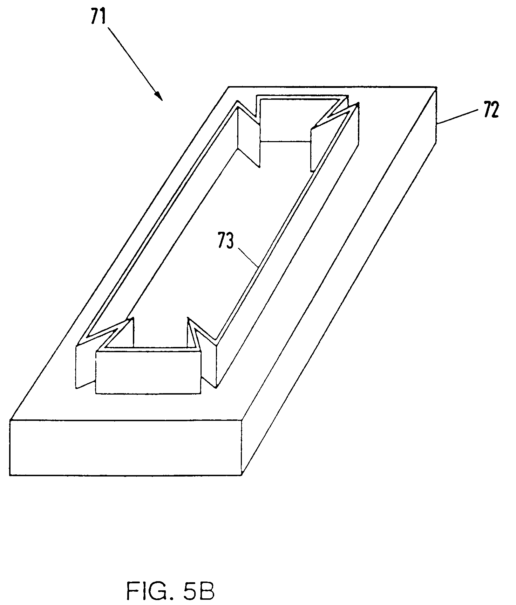

Vorzugsweise wird der Rohform-Teigling 67 gemäß Fig. 5A als kontinuierliches Teigband 69 ausgeführt, so daß im Rahmen derselben Herstellungsvorrichtung Teiglingszuschnitte kontinuierlich aufeinanderfolgend gebildet werden können. So wird in der Station 70 der Teiglingszuschnitt 60 mit seinem Umriß bzw. seiner Kontur jeweils herausgeschnitten. Hierzu umfaßt die Teiglingszuschnitt-Herstellungsstation 70 einen Schneidstempel 71, der gemäß Fig. 5B mit einem Stempelboden 72 und einem Stempelmesser 73 versehen ist, dessen Schneidkante entsprechend der Form des Umrisses des herzustellenden Teiglingszuschnitts 60 verläuft.

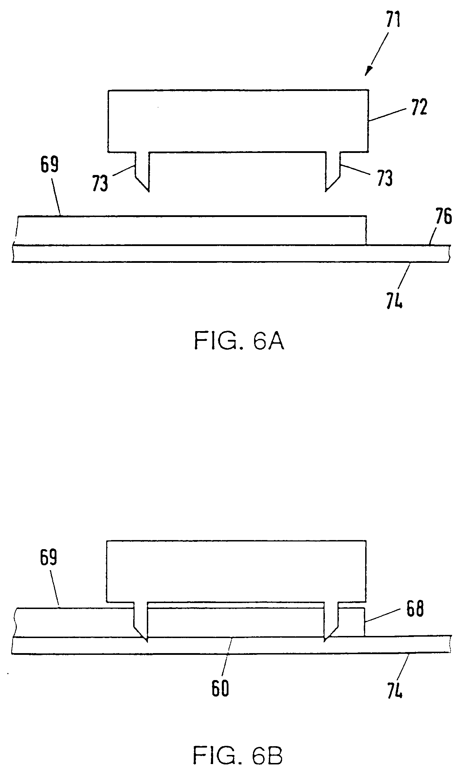

Gemäß Fig. 6A und B ist der Schneidstempel vertikal verschiebbar über einem horizontalen Stempeltisch 74 angeordnet. Die Antriebsmittel, die der vertikalen Verschiebung des Stempels 71 dienen, sind der Einfachheit halber in der Zeichnung weggelassen, weil an sich dem Fachmann bekannt. Entsprechendes gilt für die (in Fig. 5A links schematisch dargestellte) Teigbahn-Herstellungseinrichtung 80, die zur Bildung einer kontinuierlichen Teigbahn 69 in einer für das herzustellende Backprodukt geeigneten Konsistenz ausgelegt ist. Von der Teigbahn-Herstellungseinrichtung 80 aus wird über das Förderband 77 (vgl. Fig. 5A) das Teigband 69 der Teiglingszuschnitt-Ausstechstation 70 zugeführt, wobei der Schneidstempel 71 sich in angehobener Stellung befindet (s. auch Fig. 6A). Sobald die Teigbahn 69 mit ihrem freien Ende weit genug unter den Stempel 71 transportiert ist, wird dieser herunterbewegt, wobei das Stempelmesser 73 die Teigbahn 69 derart zerschneidet, daß durch die Schnittlinie der Teiglingszuschnitt 60 in seiner Form bestimmt wird - entsprechend Fig. 6B. Danach wird der Stempel 71 wieder nach oben in seine angehobene Stellung bewegt. Um zu gewährleisten, daß das Stempelmesser 73 die Teigbahn 69 vollständig durchschneidet, ist der Stempeltisch 74 wenigstens im Wirkungsbereich des Stempelmessers 73 mit einer gegebenenfalls elastisch eindrückbaren Oberfläche 76 versehen. Ferner kann es zweckmäßig sein, daß während der Ausführung der Stempelbewegungen keine Relativbewegung zwischen Stempel und Förderband stattfindet.

Nach Vollendung des Stempelvorgangs wird - wie aus Fig. 5A ersichtlich - der ausgestochene Teiglingszuschnitt 60 von der Stellung unterhalb des Schneidestempels 71 weg- und weitertransportiert. Gleichzeitig wird ein nachfolgender Endabschnitt der Teigbahn 69 unter den Schneidstempel 71 gebracht. Das kann dadurch erfolgen, daß die Teigbahn 69 einfach weiterbefördert wird, so daß sie gegen den zuletzt hergestellten Teiglingszuschnitt stößt und diesen vor sich herschiebt. Dies ist allerdings mit der Gefahr von Störungen verbunden, weil der Vorderrand bzw. das Vorderende der Teigbahn 69 am gegenüberliegenden Hinterrand des soeben hergestellten Teiglingszuschnitts kleben kann. Dem wird gemäß Fig. 5A durch die Verwendung des endlosen Förderbandes 77 begegnet. Dieses kann leicht aus einem elastisch eindrückbaren Material hergestellt sein, so daß das Stempelmesser 73 beim völligen Beschneiden und Ausstechen der Teigbahn 69 von der elastischen Oberfläche des Förderbandes 77 in der Funktion eines Stempeltisches (s. oben) nicht beschädigt wird bzw. stumpf gemacht wird.

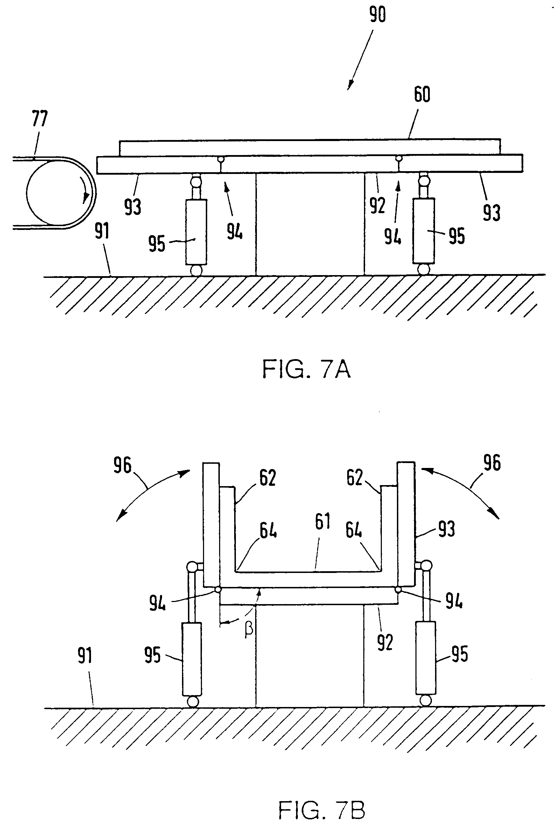

Anschließend wird der Teiglingszuschnitt 60 einer in Fig. 5A schematisch dargestellten Teigfaltstation 90 zugeführt. Gemäß Fig. 7 ist diese unmittelbar neben dem Ende des Förderbandes 77 angeordnet.

Gemäß Fig. 7A - B weist die Teigfaltstation 90 einen ortsfest an einem Maschinengestell oder -fundament 91 angeordneten Grundteil 92 auf, der zur Aufnahme des Basisteils 61 des Teiglingszuschnitts 60 dient. Hierzu besitzt er mit dem Basisteil 61 des Teiglingszuschnitts 60 eine deckungsgleiche, im Beispiel rechteckige Form. An den Seitenrändern des Grundteils 92 sind schwenkbare Faltorgane 93 in der jeweiligen Scharnierachse 94 angelenkt. Die Anordnung sowie die Abmessungen der Faltorgane 93 sind derart gestaltet, daß sie die Zusatz- bzw. Seitenteile 62, 63 des Teiglingszuschnitts 60 etwa deckungsgleich aufnehmen können. Die zur Aufnahme der kürzeren Zusatz- bzw. Seitenteile 63 an sich notwendigen Faltorgane sind der Einfachheit halber in Fig. 7A - B nicht gezeichnet.

Gemäß Fig. 7A befindet sich die Teigfaltstation 90 in Empfangsstellung, bei der die Oberflächen der gelenkigen Faltorgane 93 mit den Oberflächen des Grundteiles 92 eine gemeinsame Ebene bilden. So kann ein vom Förderband 77 transportierter Teiglingszuschnitt 60 ohne weiteres auf die miteinander bündig liegenden Oberflächen der Faltorgane 93 und des Grundteiles 92 aufgeschoben oder aufgelegt werden.

Als Bewegungs- bzw. Antriebsmittel für die Faltorgane 93 sind Stellzylinder 95 vorgesehen, die den Faltorganen 93 eine Schwenkbewegung 96 um die Schwenkachsen 94 erteilen. Durch die Schwenkbewegungen 96 werden die kürzeren und längeren Zusatz- bzw. Seitenteile 62, 63 des Teiglingszuschnitts 60 um die Faltlinien 64 nach oben in eine hochstehende Stellung gebracht. Die Faltorgane 93 können mit einem (der Einfachheit halber nicht gezeichneten) Anschlag versehen sein, um die Schwenkbewegungen 60 innerhalb eines gewünschten Schwenkwinkels β, der vorzugsweise 90° betragen soll, zu begrenzen. Gegebenenfalls sind die Stellzylinder 95 und/oder der (nicht gezeichnete) Anschlag dazu ausgelegt, den Schwenk- bzw. Faltwinkel β der Seitenteile 62, 63 bezüglich des Basisteils 61 des Teiglingszuschnitts 60 größer als den zugeordneten Winkel α zwischen den Seitenwänden 12 und dem Boden 11 der Backform 10 sein zu lassen (vgl. Fig. 1B).

Um die gemäß Fig. 5A verbleibenden, überschüssigen Teigteile bzw. -reste 68 zu entfernen und einer Weiterverarbeitung von Restteig in Neuteig beispielsweise zuzuführen, können dazu spezifisch ausgelegte (nicht gezeichnete oder erläuterte) Transportmittel vorgesehen sein.

Ferner kann es zweckmäßig sein, die Teigfaltstation 90 mit zusätzlichen (nicht gezeichneten) Faltorganen zu versehen, um die zusätzlichen Teigteile bzw. Ansätze 66 zu falten, bevor die Seitenteile 62, 63 gefaltet werden. Die Ausbildung dieser zusätzlichen Faltorgane kann entsprechend den Faltorganen 93 erfolgen. Das Falten der Teigansätze 66 kann sowohl vor als auch nach dem Falten der Seitenteile 62, 63 durchgeführt werden, wobei dann die Ansätze 66 sich entweder an der Innenseite oder an der Außenseite des im Winkel β gefalteten Teigformlings 30 befinden.

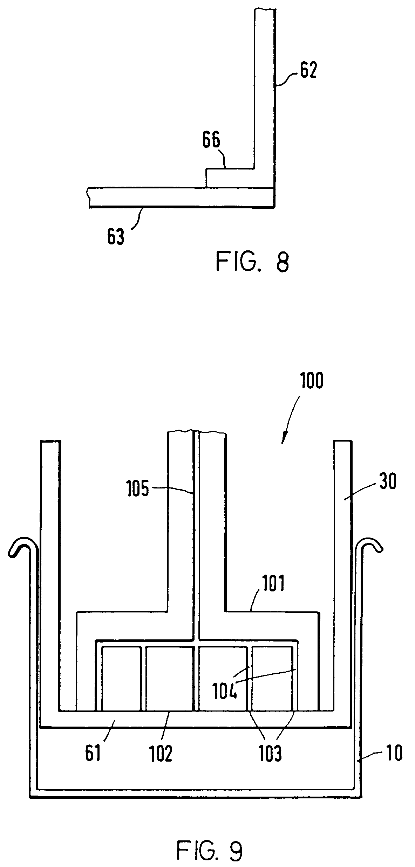

In der Draufsicht gemäß Fig. 8 wird die Funktion der zusätzlichen Teigteile bzw. -ansätze 66 im Eckbereich des gefalteten Teiglingszuschnitts 60 deutlich: Die Ansätze 66 dienen gleichsam als Kleberand für den Teiglingszuschnitt 60. Dadurch wird eine im Zusammenhang mit Füllmaterial anzustrebende flüssigkeitsfeste Abdichtung zwischen den gefalteten Seitenteilen 62, 63 des Teiglingszuschnitts erreicht. Außerdem wird eine Erhöhung der Festigkeit der gefalteten Form erzielt, so daß der Teiglingszuschnitt 60 nach Verlassen der Faltstation seine vollendete Faltform ohne weiteres beibehalten kann. Gemäß Fig. 8 sind die zusätzlichen Teigteile bzw. -ansätze früher gefaltet worden als die Seitenteile 62, 63, so daß die Ansätze 66 an der Innenseite der gebildeten Ecke anliegen.

Der fertiggefaltete Teiglingszuschnitt 60 bildet nun den (oben erläuterten) Teigformling 30 mit gleichmäßiger Wandstärke und kann in die Backform 10 eingelegt werden, die sodann auf einer Transporteinrichtung 48 (beispielsweise Förderband) der Andrückstation 40 zugeführt wird, wie in Fig. 2A erläutert. Entweder hebt man hierzu den Teigformling 30 von der Faltstation 90 an, bringt ihn in eine Stellung über der Backform 10 und senkt ihn darin ein, was wegen der festen Konsistenz des Teiges ohne weiteres erfolgen kann; oder man bedient sich vorzugsweise einer Einrichtung 100 zum Anheben und Senken des Teigformlings 30 (vgl. Fig. 9).

Gemäß Fig. 9 weist die Anhebeeinrichtung 100 einen Saugmund 101 mit einem im wesentlichen flachen Boden 102 auf, dessen Abmessungen im wesentlichen denen des Basisteils des Teigformlings 30 entsprechen. Der Boden 102 ist mit mehreren Öffnungen 103 versehen, die über Kanäle 104 mit einer Leitung 105 verbunden sind. An diese ist eine Unterdruck erzeugende Absaugvorrichtung, z. B. eine Vakuumpumpe, angeschlossen, welche der Einfachheit halber nicht gezeichnet ist. Der Saugmund 101 wird mit seinem Boden 102 auf den Basisteil 61 des Teigformlings 30 gesetzt. Dann wird beispielsweise mittels der genannten Vakuumpumpe der Druck in den Kanälen 104 verringert, so daß der Basisteil 61 des Teigformlings 30 an die Unterseite des Saugmunds 101 angesaugt und gehalten wird. Mittels an sich verfügbarer Antriebseinrichtungen (nicht gezeichnet) wird der Saugmund 101 nach oben bewegt und angehoben, wobei auch der an dessen Unterseite gehaltene Teigformling mitbewegt wird. Dann wird der Saugmund 101 in eine Stellung über der Backform 10 gebracht und darin eingesenkt, so daß sich der Teigformling 30 im Aufnahme-Hohlraum der Backform 10 befindet. Dann wird die Vakuumpumpe ausgeschaltet, so daß sie keine saugende, Unterdruck erzeugende Wirkung mehr entfaltet. Dadurch kann sich der Teigformling 30 infolge seines Gewichts vom Saugmund 101 lösen. Gegebenenfalls kann die Leitung 105 mit einer (nicht gezeichneten) Überdruck erzeugenden Vorrichtung, z. B. Gebläse, in Ver- bindung gebracht werden, um das Lösen des Teigformlings 30 vom Saugmund 101 zu erleichtern bzw. zu beschleunigen. Der Saugmund 101 wird dann wieder angehoben und aus der Backform 10 bewegt, wobei der Teigformling 30 in der Backform 10 zurückbleibt.

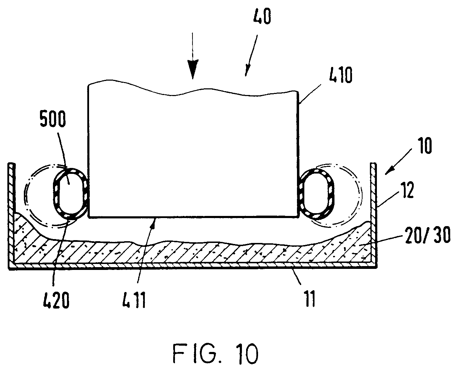

Gemäß Fig. 10 besteht eine Abwandlung der Andrückvorrichtung 40 darin, daß ein starres, beispielsweise zylinderförmiges Tragteil 410 von einem elastisch aufdehnbaren Schlauch 420 als Andrückorgan im Bereich des unteren Zylinderendes, gegenüberliegend dem Teigling 20 bzw. Teigformling 30 auf dem Backformboden 11, umgeben ist. Wird der vom Schlauch 420 umgebene, innere Ringraum 500 durch (nicht gezeichnete) Aufblasmittel in seinem Volumen erweitert bzw. expandiert (strichpunktiert in Fig. 10 angedeutet), lassen sich für den Teigling/Teigformling 20/30 besonders leicht vertikal hochstehende Seitenwände, entsprechend den oben erläuterten Zusatzteilen 62, 63 erzeugen. Hierbei können die Teigformling-Seitenwände besonders weit hochstehend gestaltet werden, insbesondere, wenn der Schlauch 420 eine entsprechend langgezogene Ovalform besitzt (nicht gezeichnet). Die starre bzw. formfeste Stirnseite 411 des zylindrischen Tragteils bzw. Kerns 410 kann entweder - wie in Fig. 10 - frei sein von einem Andrückorgan und unmittelbar auf die Teigmasse 20/30 aufgedrückt werden; alternativ ist es auch denkbar, an die der Teigmasse 20/30 gegenüberliegenden Umfangsabschnitte des Schlauches 420 ein im Volumen expandierbares Polster anzufügen, welches über die Stirnseite 411 verläuft und diese vollständig abdeckt und gleichsam wie eine Luftmatratze aufgeblasen werden kann (nicht gezeichnet). Beim Aufblasen wird dann die Teigmasse 20/30 gegen den Boden 11 der Backform 10 gedrückt.

Die Erfindung ist nicht auf die Herstellung von Backprodukten mit rechteckiger Grundform beschränkt. Vielmehr kann - abweichend von der Zeichnung - das Backprodukt auch mit rundlicher oder ovaler Form erzeugt werden. Desweiteren ist es im Rahmen der Erfindung denkbar, die einzelnen genannten Arbeitsstationen im Rahmen einer integrierten Gesamt-Herstellungsvorrichtung zusammenzufassen.

## Patentansprüche

1. Verfahren zum Formen eines Teiglings (20), indem er zugeschnitten, in oder auf einer Backform (10) angeordnet und an dessen Boden (11), Decke und/oder Wände (12) von innen oder außen angedrückt wird, wozu ein verformbares, vorzugsweise stempelartiges Andrückorgan (42, 420) in und/oder über der Backform (10) positioniert und in seinem Volumen vergrößert wird, wobei der Teiglings-Zuschnitt (60) einen Basisteil (61), dessen Abmessungen sich mit denen des Backformboden- oder Deckenteils (11) decken, und einen oder mehrere, sich an den Basisteil (61) anschließende Zusatzteile (62, 63) aufweist, die durch Faltlinien (64) vom Basisteil (61) abgegrenzt sind und sich in ihren Abmessungen mit denen der Backformwände (12) decken, dadurch gekennzeichnet, daß die Zusatzteile (62, 63) durch Ansätze (66) gegenüber den Abmessungen der Backformwände (12) erweitert sind.

2. Verfahren nach Anspruch 1, dadurch gekennzeichnet, daß die Größenzunahme des Andrücksorgans (42, 420) durch das Einführen eines Fluids in einen durch eine elastische Membran begrenzten Raum (50, 500) erreicht wird.

3. Verfahren nach Anspruch 2, dadurch gekennzeichnet, daß das Fluid wenigstens im wesentlichen aus Luft besteht.

4. Verfahren nach einem der vorangehenden Ansprüche, dadurch gekennzeichnet, daß vor dem Anordnen des Zuschnitts (60) in der Backform (10) die Zusatzteile (62, 63) des Zuschnitts (60) relativ zu dessen Basisteil (61) gefaltet werden.

5. Verfahren nach Anspruch 4, dadurch gekennzeichnet, daß der Teiglings-Zuschnitt (60) nach dem Falten der genannten Zusatzteile dadurch in der Backform angeordnet wird, daß man ihn anhebt, über der Backform (10) positioniert und anschließend in die Backform (10) senkt.

6. Verfahren nach Anspruch 5, dadurch gekennzeichnet, daß das Anheben, Positionieren und Senken mittels eines Saugmundstücks (101) durchgeführt wird.

7. Verfahren zur Herstellung eines Backprodukts, wobei ein Teigling (30, 60) hergestellt und in einer Backform (10) einer Wärmebehandlung unterworfen wird, gekennzeichnet durch die Verwendung des Verfahrens nach einem der vorangehenden Ansprüche.

8. Verfahren nach Anspruch 7, dadurch gekennzeichnet, daß der in die Backform eingelegte Teiglings-Zuschnitt (60) mit Füllmaterial beaufschlagt wird.

9. Verfahren nach Anspruch 7 oder 8, dadurch gekennzeichnet, daß der Teiglings-Zuschnitt (60) durch wiederholtes Ausstechen oder -schneiden aus einer kontinuierlich hergestellten Teigbahn (69) gebildet wird.

10. Vorrichtung zum Herstellen von Backprodukten,insbesondere zur Durchführung des Verfahrens nach einem der vorangehenden Ansprüche, mit einer Einrichtung (80) zur Herstellung einer kontinuierlichen Teigbahn (69), einer Station (70) zum Ausstechen von Teiglingszuschnitten (60) aus der Teigbahn (69), einer Station (90) zum Falten der Teiglingszuschnitte (60), einer Station (100) zum Anordnen der gefalteten Teiglingszuschnitte (60) in Backformen (10), eine Station (40) zum Andrücken des in der Backform (10) befindlichen Teiglingszuschnitts (60) und/oder eine Station zum Füllen des in die Backform eingelegten Teigformlings, dadurch gekennzeichnet, daß die Station (90) zum Falten der Teiglingszuschnitte (60) einen ortsfest angeordneten Grundteil (92) und gelenkig mit dem Grundteil (92) verbundene Faltorgane (93) umfaßt.

11. Vorrichtung nach Anspruch 10, dadurch gekennzeichnet, daß die Station (70) zum Herstellen der Teiglingszuschnitte (60) eine relativ zur Transportrichtung der Teigbahn (69) bewegliche, insbesondere stempelartig betätigbare Ausstechform (71, 73) und/oder eine Stempelunterlage (76,77) mit elastischer und/oder eindrückbarer Oberfläche aufweist.

12. Vorrichtung nach Anspruch 11, dadurch gekennzeichnet, daß die Ausstechform ein Stempelmesser (71) aufweist, dessen Schneidkante (73) entsprechend dem Umfangsprofil des Zuschnitts (60) verläuft.

13. Vorrichtung nach einem der Ansprüche 10 bis 12, gekennzeichnet durch Mittel, insbesondere Stellzylinder (95), die den Faltorganen (93) eine Schwenkbewegung (96) relativ zum Grundteil (92) erteilen.

14. Vorrichtung nach Anspruch 13, dadurch gekennzeichnet, daß die genannten Mittel dazu eingerichtet sind, den Schwenkwinkel (β) der Faltorgane (93) größer sein zu lassen als der entsprechende Winkel (α) zwischen den Seitenwänden (12) und dem Boden (11) der Backform (10).

15. Vorrichtung nach mindestens einem der Ansprüche 10 - 14, dadurch gekennzeichnet, daß die Station (100) zum Anordnen der gefalteten Teiglingszuschnitte (60) in den Backformen (10) einen Saugmund (101) mit einem im wesentlichen flachen Boden (102) umfaßt, welcher Boden (102) mit einer Anzahl Öffnungen (103) versehen ist, die mit einer einen Unterdruck erzeugenden Einrichtung in Verbindung gebracht werden können und daß weiter Mittel vorgesehen sind, den Saugmund (101) vertikal zu verschieben.

16. Vorrichtung nach mindestens einem der Ansprüche 10-15, dadurch gekennzeichnet, daß die Station (40) zum Andrücken des Teigformlings (30) in der Backform (10) ein zumindest teilweise verformbares Andrückorgan (42, 420) aufweist, das in seiner Größe und/oder Ausdehnung veränderbar ist.

17. Vorrichtung nach Anspruch 16, dadurch gekennzeichnet, daß das verformbare Andrückorgan (42) ein vertikal verschiebbares Basis- oder Tragteil (41) und eine an diesem abdichtend befestigte elastische Membran aufweist und daß Mittel (51) vorgesehen sind, Fluid in den durch den Basisteil (41) und/oder die Membran begrenzten Raum (50) einzuführen.

18. Vorrichtung nach Anspruch 16, dadurch gekennzeichnet, daß das Andrückorgan mit einem versteiften Tragteil (410), beispielsweise in Zylinderform, realisiert ist, der kernartig von einem expandierbaren Torus- und/oder Wulst-Hohlkörper (420) im auf den Teigling (20) einwirkenden Bereich (411) umgeben ist.

19. Vorrichtung nach Anspruch 18, dadurch gekennzeichnet, daß der Hohlkörper als beispielsweise durch Aufblasen aufdehnbarer Schlauch (420) und/oder um die Stirnseite (411) angebrachtes, entsprechend aufdehnbares Polster ausgeführt ist.

## Claims

1. Method of shaping a dough article (20), wherein the dough is cut to size, is placed in or on a baking mould (10) and is pressed against its bottom (11), top and/or sides (12) from the inside or outside, to which end a deformable, preferably punch-like pressure element (42, 420) is positioned in and/or over the baking mould (10) and is expanded in volume, wherein the dough blank (60) has a base part (61) whose dimensions are congruent with those of the baking mould bottom or top (11) and one or more supplementary parts (62, 63) adjoining the base part (61), which are divided from the base part by fold lines (64) and which have dimensions congruent with those of the baking mould sides (12), characterised in that the supplementary parts (62, 63) are expanded relative to the dimensions of the baking mould sides (12) by gussets (66).

2. Method according to claim 1, characterised in that the increase in size of the pressure element (42, 420) is achieved by introducing a fluid into a chamber (50, 500) defined by a resilient membrane.

3. Method according to claim 2, characterised in that the fluid consists at least substantially of air.

4. Method according to one of the preceding claims, characterised in that before placing the blank (60) in the baking mould (10), the supplementary parts (62, 63) of the blank (60) are folded relative to its base part (61).

5. Method according to claim 4, characterised in that the dough blank (60) is disposed in the baking mould after folding of the supplementary parts by being raised, positioned over the baking mould (10) and then lowered into the baking mould (10).

6. Method according to claim 5, characterised in that the raising, positioning and lowering are carried out by means of a suction nozzle (101).

7. Method of manufacturing a bakery product, wherein a dough article (30, 60) is produced and is subjected to a heat treatment in a baking mould (10), characterised by the use of the method according to one of the previous claims.

8. Method according to claim 7, characterised in that the dough blank (60) inserted in the baking mould is filled with a filling.

9. Method according to claim 7 or 8, characterised in that the dough blank (60) is formed by repeated punching or cutting out of a continuously produced dough strip (69).

10. Apparatus for the manufacture of bakery products, in particular for carrying out the method according to one of the previous claims, comprising apparatus (80) for producing a continuous dough strip (69), a bay (70) for punching out dough blanks (60) from the dough strip (69), a bay (90) for folding the dough blanks (60), a bay (100) for placing the folded dough blanks (60) in baking moulds (10), a bay (40) for pressing the dough blank (60) located in the baking mould (10) and/or a bay for filing the dough article (60) inserted into the baking mould, characterised in that the bay (90) for folding the dough blanks (60) comprises a non-displaceable base part (92) and folding elements (93) connected pivotably to the base part (92).

11. Apparatus according to claim 10, characterised in that the bay (70) for manufacturing the dough blanks (60) has a punching mould (71, 73) which is movable relative to the transport direction of the dough strip (69) and which is in particular actuatable as a press, and/or a press substrate (76, 77) with a surface which is resilient and/or capable of being pressed in.

12. Apparatus according to claim 11, characterised in that the punching die has a punch blade (71) whose cutting edge (73) runs along the outline of the blank (60).

13. Apparatus according to one of claims 10 to 12, characterised by means, in particular control cylinders (95) for imparting to the folding elements (93) a pivoting motion (96) relative to the base part (92).

14. Apparatus according to claim 13, characterised in that the means referred to are so arranged as to ensure that the pivotal angle (β) of the folding elements (93) is left larger than the corresponding angle (α) between the side walls (12) and the bottom (11) of the baking mould (10).

15. Apparatus according to at least one of claims 10-14, characterised in that the bay (100) for disposing the folded dough blanks (60) in the baking moulds (10) comprises a suction head (101) with a substantially flat base (102), which base (102) is provided with a number of apertures (103) which can be connected to a device for generating a vacuum, and in that means are also provided for displacing the suction head (101) vertically.

16. Apparatus according to at least one of claims 10-15, characterised in that the bay (40) for pressing the dough article (30) into the baking mould (10) has a pressure element (42, 420) which is at least partly deformable and whose size and/or elongation is variable.

17. Apparatus according to claim 16, characterised in that the deformable pressure element (42) has a vertically displaceable base or support member (41) and a resilient membrane fixed thereto so as to form a seal, and in that means (51) are provided to introduce fluid into the space (50) defined by the base part (41) and/or the membrane.

18. Apparatus according to claim 16, characterised in that the pressure element is formed with a reinforced support member (410), for example in a cylindrical shape, which is surrounded like a core by an expandable toroidal and/or beaded hollow body (420) in the region (411) acting on the dough article (20).

19. Apparatus according to claim 18, characterised in that the hollow body is formed for example as a hose (420) which is expandable by inflation and/or as a pillow mounted around the end face (411) and expandable in the same way.

## Revendications

1. Procédé de moulage d'une pièce de pâte (20), selon lequel celle-ci est découpée, disposée dans ou sur un moule à pâtisserie (10) et pressée, de l'intérieur ou de l'extérieur, sur le fond (11), le dessus de moule et/ou les parois (12) de ce moule à pâtisserie, ce pour quoi un organe de pressage (42, 420) déformable, de préférence en forme de pilon, est positionné à l'intérieur et/ou au-dessus du moule à pâtisserie (10) et son volume est augmenté, le flan de pâte découpé (60) présentant une partie de base (61) dont les dimensions coïncidente avec celles de la partie du moule formant le fond ou le dessus de moule (11), et une ou plusieurs parties additionnelles (62, 63), qui se raccordent à la partie de base (61), qui sont délimitées relativement à la partie de base (61) par des lignes de pliage (64), et dont les dimensions coincident avec celles des parois (12) du moule à pâtisserie, caractérisé en ce que les parties additionnelles (62, 63) sont agrandies par des appendices (66), par rapport aux dimensions des parois (12) du moule à pâtisserie.

2. Procédé selon la revendication 1, caractérisé en ce que l'accroissement de la taille de l'organe de pressage (42, 420) est obtenu par l'introduction d'un fluide dans une chambre (50, 500) délimitée par une membrane élastique.

3. Procédé selon la revendication 2, caractérisé en ce que le fluide est constitué au moins essentiellement par de l'air.

4. Procédé selon l'une des revendications précédentes, caractérisé en ce qu'avant de disposer le flan découpé (60) dans le moule à pâtisserie (10), on plie les parties additionnelles (62, 63) du flan découpé (60) par rapport à la partie de base (61) de ce dernier.

5. Procédé selon la revendication 4, caractérisé en ce que l'on dispose le flan de pâte découpé (60), après le pliage des parties additionnelles citées, dans le moule à pâtisserie, en le soulevant, en le positionnant au-dessus du moule à pâtisserie (10), et en l'abaissant ensuite dans le moule à pâtisserie (10).

6. Procédé selon la revendication 5, caractérisé en ce que le soulèvement, le positionnement et l'abaissement sont effectués à l'aide d'une buse d'aspiration (101).

7. Procédé de fabrication d'un produit de pâtisserie, selon lequel une pièce de pâte (30, 60) est confectionnée et est soumise à un traitement à la chaleur dans un moule à pâtisserie (10), caractérisé par la mise en oeuvre du procédé selon l'une des revendications précédentes.

8. Procédé selon la revendication 7, caractérisé en ce que de la matière de remplissage est amenée sur le flan de pâte découpé (60) déposé dans le moule à pâtisserie.

9. Procédé selon la revendication 7 ou 8, caractérisé en ce que le flan de pâte découpé (60) est réalisé par découpage à l'emporte-pièce répété ou sectionnement répété d'une bande de pâte (69) produite en continu.

10. Dispositif de fabrication de produits de pâtisserie, notamment destiné à la mise en oeuvre du procédé selon l'une des revendications précédentes, comprenant un dispositif (80) destiné à produire une bande de pâte (69) continue, un poste (70) pour le découpage à l'emporte-pièce de flans de pâte (60) dans la bande de pâte (69), un poste (90) pour le pliage des flans de pâte découpés (60), un poste (100) pour disposer les flans de pâte découpés (60) pliés dans des moules à pâtisserie (10), un poste (40) pour le pressage du flan de pâte découpé (60) se trouvant dans le moule à pâtisserie (10), et/ou un poste de remplissage de la pièce de pâte à mouler déposée dans le moule à pâtisserie, caractérisé en ce que le poste (90) pour le pliage des flans de pâte découpés (60) comporte une partie de base (92) montée en position fixe, et des organes de pliage (93) reliés de manière articulée à la partie de base (92).

11. Dispositif selon la revendication 10, caractérisé en ce que le poste (70) de fabrication des flans de pâte découpés (60) comporte une matrice de découpage à l'emporte-pièce (71, 73) mobile relativement à la direction de transport de la bande de pâte (69) et susceptible d'être actionnée, notamment à la manière d'un poinçon, et/ou une base de poinçonnage (76, 77) à surface élastique et/ou pouvant être enfoncée.

12. Dispositif selon la revendication 11, caractérisé en ce que la matrice de découpage à l'emporte-pièce présente une lame de poinçonnage (71), dont l'arête de coupe (73) s'étend conformément au profil du pourtour du flan découpé (60).

13. Dispositif selon l'une des revendications 10 à 12, caractérisé par des moyens, notamment des vérins de déplacement (95), qui communiquent aux organes de pliage (93), un mouvement de pivotement (96) par rapport à la partie de base (92).

14. Dispositif selon la revendication 13, caractérisé en ce que les moyens cités sont réglés de manière à faire que l'angle de pivotement (β) des organes de pliage (93) plus grand que l'angle (α) correspondant entre les parois latérales (12) et le fond (11) du moule à pâtisserie (10).

15. Dispositif selon l'une au moins des revendications 10 à 14, caractérisé en ce que le poste (100) destiné à disposer les flans de pâte découpés (60), pliés, dans les moules à pâtisserie (10), comprend une buse d'aspiration (101) présentant un fond (102) sensiblement plat, fond (102) qui est pourvu d'un certain nombre d'ouvertures (103) pouvant être reliées à un dispositif produisant une dépression, et en ce que par ailleurs, des moyens sont prévus pour déplacer verticalement la buse d'aspiration (101).

16. Dispositif selon l'une au moins des revendications 10 à 15, caractérisé en ce que le poste (40), destiné à presser la pièce de pâte à mouler (30) dans le moule à pâtisserie (10), comporte un organe de pressage (42, 420) au moins partiellement déformable, dont la taille et/ou le degré d'expansion peuvent être modifiés.

17. Dispositif selon la revendication 16, caractérisé en ce que l'organe de pressage déformable (42) présente une partie de base ou de support (41) déplaçable verticalement et une membrane élastique fixée de manière étanche à cette partie de base ou de support, et en ce que des moyens (51) sont prévus pour introduire un fluide dans la chambre (50) délimitée par la partie de base (41) et/ou la membrane.

18. Dispositif selon la revendication 16, caractérisé en ce que l'organe de pressage est réalisé de manière à comporter une partie de support (410) rigidifiée, par exemple en forme de cylindre, qui, dans la zone (411) agissant sur la pièce de pâte (20), est entourée, à la manière d'un mandrin central, par un corps creux expansible (420) en forme de tore et/ou de bourrelet.

19. Dispositif selon la revendication 18, caractérisé en ce que le corps creux est réalisé sous la forme d'un boyau (420) pouvant être dilaté, par exemple par gonflage, et/ou d'un coussin mis en place autour de la face frontale (411) et susceptible d'être dilaté de manière appropriée.
